# EUROPEAN PATENT APPLICATION

(11) **EP 4 831 114 A1**
(43) Date of publication of application: **28.10.2026**
(21) Application number: 24907995.5
(22) Date of filing: 16.12.2024
(51) Int. Cl.: C01B 17/36, C01B 17/26, H01M 10/0562

(54) **PREPARATION METHOD OF LITHIUM SULFIDE WITH LITHIUM POLYSULFIDE**

(30) Priority: 18.12.2023 KR 20230185167
(71) Applicant: POSCO Holdings Inc., Pohang-si, Gyeongsangbuk-do 37859 (KR)
(72) Inventor: KIM, Byoungju, Pohang-si, Gyeongsangbuk-do 37859 (KR); KO, Young-Seon, Pohang-si, Gyeongsangbuk-do 37859 (KR); CHUNG, Garam, Pohang-si, Gyeongsangbuk-do 37859 (KR)
(74) Representative: Pfenning, Meinig & Partner mbB
(86) International application number: PCT/KR2024/020449
(87) International publication number: WO 2025/135712

(57) **Abstract**

The present invention relates to a method for preparing lithium sulfide using lithium polysulfide, the method comprising: heat-treating a mixture of an aqueous lithium sulfate solution and a carbon-based material; solvent-extracting the heat-treated product with a solvent comprising water (H₂O); and obtaining lithium sulfide, wherein the solvent-extracting of the heat-treated product comprises adding S₈ to the heat-treated product.

## Description

### [TECHNICAL FIELD]

The present invention relates to an all-solid-state electrolyte, and more particularly, to a method for preparing lithium sulfide, in which lithium polysulfide is added.

### [BACKGROUND ART]

Secondary batteries are widely used in a range of applications, from small electronic devices such as mobile phones or laptops to large-scale devices such as electric vehicles (EV) or energy storage systems (ESS). As the field of application for secondary batteries expands to all areas of daily life, there is an increasing demand for stability, in addition to performance characteristics such as high energy density and long lifespan.

Electrolytes conventionally used in lithium secondary batteries were mostly liquid electrolytes using organic solvents, but as problems such as risk of leakage or fire of the liquid electrolytes occurred, strict packaging was required, and there was a limit to increasing energy density above a certain level due to the strict packaging. Accordingly, the necessity for an all-solid-state battery using an inorganic solid electrolyte rather than an organic liquid electrolyte has emerged.

The all-solid-state battery may allow for the production of battery cells safely by excluding organic solvents such as liquid electrolytes. In addition, since inorganic solid electrolytes do not decompose and maintain stability over a wide voltage range, there is an advantage in that high-voltage electrode materials may be utilized.

The solid electrolyte is classified into an oxide-based type and a sulfide-based type, and the sulfide-based solid electrolyte is characterized by high ionic conductivity compared to the oxide-based solid electrolyte. A primary raw material for the sulfide-based solid electrolyte is lithium sulfide (Li₂S). As for the method for synthesizing the lithium sulfide, a synthesis method using a high-energy ball mill, a synthesis method using a wet plasma process, and a wet/dry method using lithium metal are being utilized.

The lithium sulfide is an electrolyte with excellent ionic conductivity and is in high demand as a raw material for a solid electrolyte of an all-solid-state battery, which may have a low risk of fire due to its high stability. However, the preparation of the lithium sulfide suffers from problems including high manufacturing costs and a complicated production process.

During synthesis of a sulfide-based solid electrolyte, there is a problem in that sulfur is excessively lost during heat treatment due to a problem with atmospheric stability of materials and a problem with excessive use of lithium sulfide raw materials.

### [DETAILED DESCRIPTION OF THE INVENTION]

### [Technical Problem]

A technical problem to be solved by the present invention is to provide a method for preparing lithium sulfide that is advantageous in terms of atmospheric stability during the synthesis of a sulfide-based solid electrolyte and prevents the problem of excessive sulfur loss due to the excessive use of a lithium sulfide starting material.

### [Technical Solution]

A method for preparing lithium sulfide according to an embodiment of the present invention may comprise: heat-treating a mixture of lithium sulfate powder and a carbon-based material; solvent-extracting a heat-treated product with water (H₂O) or an aprotic polar solvent; and obtaining lithium sulfide, wherein the solvent-extracting of the heat-treated product may comprise adding a sulfur source to the heat-treated product.

In an embodiment, in the solvent-extracting of the heat-treated product, a weight ratio of the sulfur source to Li₂S in the heat-treated product may be 0.05 to 2.0.

In an embodiment, the sulfur source may be S₈.

In an embodiment, the aprotic polar solvent may comprise at least one of tetrahydrofuran (THF), toluene, diethyl ether, and NMP (1-methyl-2-pyrrolidinone).

In an embodiment, the solvent extraction step comprises obtaining Li₂Sₓ from a solvent-extracted product, wherein x in the Li₂Sₓ may be 4 or more.

In an embodiment, the obtaining of the lithium sulfide may comprise drying the solvent-extracted product at 40 to 60 °C.

In an embodiment, the obtaining of the lithium sulfide may comprise heat-treating the solvent-extracted product at a temperature of 400 °C or more.

In an embodiment, in the step of heat-treating the mixture of the lithium sulfate and the carbon-based material, the mixing ratio of the carbon-based material to the lithium sulfate (C:Li₂SO₄) may be from 3:1 to 7:1 by weight.

In an embodiment, before the drying step, the method may comprise a step of concentrating the solvent-extracted product at a temperature ranging from 60 to 70 °C.

In an embodiment, in the solvent extraction step, when the solvent is water (H₂0), the method may comprise a step of purifying the solvent-extracted product.

In an embodiment, the purifying step may use a solvent comprising at least one of tetrahydrofuran (THF), toluene, diethyl ether, and NMP (1-methyl-2-pyrrolidinone).

In an embodiment, the carbon-based material may be at least one selected from the group consisting of coke, artificial graphite, carbon powder, graphene, activated carbon, and carbon black, each having a carbon content of 99.9% or more.

In an embodiment, the step of heat-treating the mixture of the lithium sulfate and the carbon-based material may be performed in a temperature range of 800 to 1,000 °C.

In an embodiment, the step of heat-treating the mixture of the aqueous lithium sulfate solution and the carbon-based material may be performed in a range of 1 to 3 hours.

In an embodiment, the solvent extraction step may comprise adding water (H₂O) as an additive when the solvent is an aprotic polar solvent.

In an embodiment, a ratio of the added amount of the solvent to the added amount of the added water may be 150 to 250.

### [Advantageous Effects]

A method for preparing lithium sulfide according to an embodiment of the present invention uses a sulfur source in an extraction process after thermal reduction, and performs solvent extraction with water (H₂O) or an aprotic polar solvent, whereby, upon synthesis of a sulfide-based solid electrolyte, stability against atmospheric moisture may be secured, a process may be simplified, and economic efficiency may be secured when applying equipment in the future.

### [BRIEF DESCRIPTION OF THE DRAWINGS]

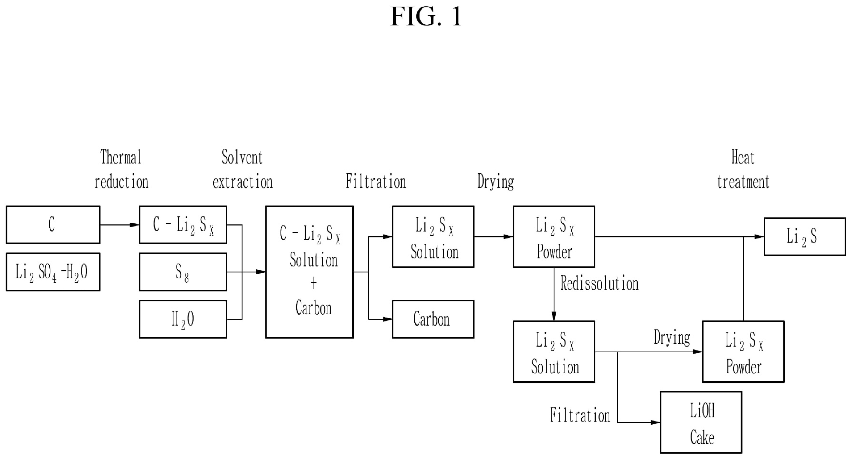

FIG. 1 is a schematic diagram of a method for preparing lithium sulfide of the present invention.
FIGS. 2a to 2c are UV analysis graphs according to an Example and a Comparative Example of the present invention.
FIGS. 3a to 3g are XRD pattern graphs of Examples and Comparative Examples of the present invention.

### [BEST MODE FOR CARRYING OUT THE INVENTION]

Terms such as first, second, and third are used to describe various parts, components, regions, layers, and/or sections, but are not limited thereto. These terms are used only to distinguish one part, component, region, layer, or section from another part, component, region, layer, or section. Thus, a first part, component, region, layer, or section described below may be termed a second part, component, region, layer, or section without departing from the scope of the present invention.

The terminology used herein is for the purpose of mentioning particular embodiments only and is not intended to limit the present invention. As used herein, the singular forms include the plural forms unless the context clearly indicates otherwise. The meaning of "comprising" used in the specification specifies a specific characteristic, region, integer, step, operation, element, and/or component, and does not exclude the presence or addition of other characteristics, regions, integers, steps, operations, elements, and/or components.

When a part is referred to as being "on" or "above" another part, it may be directly on or above the other part or other parts may be involved therebetween. In contrast, when a part is referred to as being "directly on" another part, no other part is interposed therebetween.

Unless otherwise defined, all terms including technical and scientific terms used herein have the same meaning as commonly understood by one of ordinary skill in the art to which this invention belongs. Terms defined in commonly used dictionaries are further interpreted as having meanings consistent with the relevant technical literature and the present disclosure, and are not interpreted in an ideal or very formal sense unless defined. In addition, unless otherwise specified, % means weight %, and 1 ppm is 0.0001 weight %.

In the present specification, the average particle size (D50) may be defined as a particle size corresponding to 50% of the cumulative volume in a particle size distribution curve of particles. The average particle size (D50) may be measured, for example, using a laser diffraction method. The laser diffraction method may measure a particle size ranging from a general submicron range to several mm, and may obtain results with high reproducibility and high resolution.

Hereinafter, embodiments of the present invention will be described in detail so that those skilled in the art may easily carry out the present invention. However, the present invention may be implemented in many different forms and is not limited to the embodiments described herein.

A method for preparing lithium sulfide according to an embodiment of the present invention may comprise: heat-treating a mixture of an aqueous lithium sulfate solution and a carbon-based material; solvent-extracting the heat-treated product; and obtaining lithium sulfide. Specifically, the method for preparing lithium sulfide of the present invention may prepare high-purity Li₂S by reducing lithium sulfate (Li₂SO₄), which is an intermediate product generated during a lithium (Li) extraction process, using a carbon-based material such as graphite or coke to synthesize Li₂S, and sequentially performing extraction, filtration, drying, and heat-treatment processes using a solvent. More specifically, in the extraction and filtration steps using a solvent, the method for preparing lithium sulfide of the present invention may simplify equipment and processes for isolation from the atmosphere in a Li₂S preparation process by using water (H₂O) as an additive for the extraction solvent or using water itself as the solvent to form and dry Li₂Sₓ, and may be advantageous for scale-up, particularly in selecting equipment for a drying process.

In the step of heat-treating a mixture of an aqueous lithium sulfate solution and a carbon-based material, a mixing ratio of the carbon-based material to the aqueous lithium sulfate solution (C:Li2SO4) may be in a weight ratio of 3:1 to 7:1. Specifically, the weight ratio may be 4:1 to 6:1. Specifically, lithium sulfate powder and the carbon-based material may be first mixed and stirred.

In an embodiment, the step of heat-treating the mixture of the lithium sulfate powder and the carbon-based material is performed by pre-mixing the lithium sulfate powder and the carbon powder through stirring using a powder mixer (Universal Mixer). Specifically, the mixing may be performed by dry mixing. In an embodiment, the step of preparing the mixed powder may comprise a stirring step for 30 minutes or more, specifically, 60 minutes or more. By performing the stirring step within the time range, the carbon and the aqueous lithium sulfate solution may be easily mixed.

In an embodiment, the heat-treating of the mixture of the lithium sulfate powder and the carbon-based material may be performed in a temperature range of 800 to 1,000 °C. Specifically, the temperature range may be 850 to 950 °C.

In one embodiment, the step of heat-treating the mixture of the lithium sulfate powder and the carbon-based material may be performed in an inert atmosphere. Specifically, the inert atmosphere may consist of, for example, a vacuum or a gas selected from the group consisting of helium, neon, krypton, xenon, nitrogen, and argon.

In one embodiment, the step of heat-treating the mixture of the lithium sulfate powder and the carbon-based material may be performed for a period in the range of 1 to 3 hours. Specifically, the time range may be 1.5 to 2.5 hours. By mixing the aqueous lithium sulfate solution and the carbon-based material under the temperature and time conditions described above, the lithium sulfate powder and the carbon-based material are uniformly mixed, such that C-Li₂S may be easily formed.

In an embodiment, the step of heat-treating the mixture of the lithium sulfate powder and the carbon-based material may include grinding the carbon-based material before mixing the carbon-based material with the lithium sulfate powder. In an embodiment, the step of grinding the carbon-based material may include grinding the carbon-based material using a jaw crusher or a pin mill and removing fine powder using a 200 mesh (pore size of 65 µm) sieve.

In an embodiment, the carbon-based material may be at least one selected from the group consisting of coke, artificial graphite, carbon powder, graphene, activated carbon, and carbon black, each having a carbon content of 99.9% or more. Specifically, the carbon-based material of the present invention may be artificial graphite, for example, a spent resistance material from an Acheson furnace. The spent resistance material refers to a resistance material that is discarded without being reused when coke used as a resistance material undergoes a heat treatment process at 3,000 °C and is graphitized, resulting in an increase in electrical conductivity due to increased crystallinity, such that the coke can no longer perform its role as a resistance material. The use of the spent resistance material provides an eco-friendly advantage.

The step of solvent-extracting the heat-treated product may be a step of solvent-extracting, with water (H₂O) or an aprotic polar solvent, the heat-treated product obtained from the step of heat-treating the mixture of the lithium sulfate powder and the carbon-based material. Specifically, the heat-treated product may be a C-Li₂S composite in which C and Li₂S are mixed.

The aprotic polar solvent may be, for example, at least one selected from the group consisting of toluene, diethyl ether, and tetrahydrofuran (THF). In the solvent extraction step of the present invention, by using water or the aprotic polar solvent instead of ethanol as compared to the conventional art, the evaporation of water in a subsequent drying process is facilitated, thereby overcoming the limitations in the scale-up of equipment.

In an embodiment, in the step of solvent-extracting the heat-treated product, when the solvent is an aprotic polar solvent, the extraction process may be performed using water (H₂O) as an additive. In an embodiment, a ratio of the amount of the solvent added to the amount of the water added may be 150 to 250. Specifically, the ratio may be 175 to 225. For example, the amount of the water added may be 0.5 to 2 mL.

As the water is used as an additive, there is no need for special airtightness to block the extraction process and the drying process from the atmosphere, and thus there are advantages in that facility investment costs may be lowered and the range of selectable equipment may be expanded when mass production is considered.

In one embodiment, in the step of solvent-extracting the heat-treated product, when the solvent is water, the method may further comprise a purification step of purifying with an aprotic polar solvent. Specifically, when water is used as the solvent, after the drying process, an additional purification step may be performed, which comprises re-dissolving the product using an aprotic polar solvent, such as tetrahydrofuran (THF), toluene, diethyl ether, or NMP (1-methyl-2-pyrrolidinone), and then performing a filtration process. The reason for including the purification step is that since LiOH is present in a certain ratio along with Li₂Sₓ in the dried product, an excessive amount of Li₂SO₄ is formed during the heat treatment.

In an embodiment, the solvent-extracting of the heat-treated product may comprise adding a sulfur source to the heat-treated product. Specifically, after adding the sulfur source to the heat-treated product, an extraction process may be performed with a solvent comprising water.

In one embodiment, the sulfur source may be S₈. By using S₈ as the sulfur source, there is an advantage that lithium polysulfide (Li₂Sₓ) may be formed without using toxic gases such as H₂S or CS₂.

In an embodiment, in the step of adding the sulfur source to the heat-treated product, a weight ratio [g/g] of the sulfur source to Li₂S in the heat-treated product may be 0.05 to 2.0. Specifically, the weight ratio may be 0.1 to 1.5, and more specifically, 0.1 to 0.8. By satisfying the weight ratio within the range described above, there is an advantage that high-purity Li₂S having high yield and low oxygen content may be prepared.

When the weight ratio is out of the lower limit of the range described above, there is a problem in that the sulfur source is excessively small, and thus the content of Li₂SO₃ and Li₂SO₄ due to LiOH generated during the drying process increases.

In one embodiment, in the solvent extraction step, the solvent may further comprise at least one selected from the group consisting of tetrahydrofuran (THF), toluene, diethyl ether, and NMP (1-methyl-2-pyrrolidinone). In the solvent extraction step, by utilizing a solvent essentially consisting of water and further comprising the aforementioned solvent, the solubility of a polysulfide compound is increased, thereby providing the advantage of an increased final product yield.

In another embodiment, in the solvent extraction step, an essential solvent may comprise at least one selected from the group consisting of tetrahydrofuran (THF), toluene, diethyl ether, and NMP (1-methyl-2-pyrrolidinone), and a solvent comprising water may be further added. At this time, the solvent comprising water may be further added in an amount of 0.1 ml or more, specifically 0.2 to 1.0 ml, and more specifically 0.5 to 0.7 ml. At this time, the role of the added H₂O may be confirmed through the following reaction formula.

[Reaction Scheme] Li₂S + H₂O + S₈ → 2Li⁺ + SH⁻ + OH⁻ + S₈ → 2Li + S_{X}H⁻ + OH⁻

Looking at the reaction scheme, in the solvent extraction step, tetrahydrofuran (THF), which is an essential solvent, has low solubility; thus, it is difficult for each substance to be ionized, and the solvent does not induce a reaction that forms a polysulfide. However, it may be confirmed that when an extremely small amount of water (H₂O) of the present invention is added to a slurry in which a powder containing C-Li₂S and S₈ is dispersed in THF, the color of the transparent THF solution changes from green to red. This phenomenon confirms that Li₂S is ionized into Li⁺ ions, SH⁻ ions, and OH⁻ ions by the addition of H₂O, and at this time, S₈ is reduced by the formed SH⁻ ions to form Sₓ²⁻ ions. At this time, the value of X of Sₓ²⁻ is determined by the ratio of the amount of S₈ added to the amount of SH- ions.

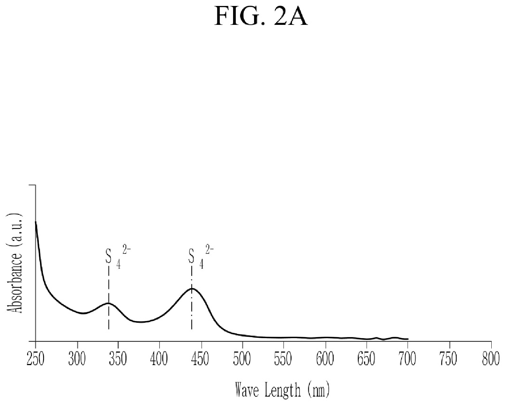

In the present invention, it was confirmed that most results having a relatively low oxygen content correspond to cases where the value of X is 4 or greater. In an ICP analysis of a dried product obtained by drying the solution, it was confirmed that when the ratio of S to Li is in the range of 2:1 to 4:1, the final Li₂S exhibits a low oxygen content of 1.5% or less. A more detailed description thereof will be provided later with reference to FIGS. 2a to 2c.

By adding a sulfur source to the heat-treated product, an oxidation-reduction reaction occurs in a solvent comprising water, such that an aqueous lithium sulfide (Li₂Sₓ) solution may be obtained. Specifically, in the solvent extraction step, Li₂Sₓ may be obtained from the solvent-extracted product.

In an embodiment, in the step of obtaining Li₂Sₓ, x may be 4 or more. The Li₂Sₓ in which x is 4 or more is obtained by mixing C-Li₂S, a sulfur source, and water in a solvent extraction process, and thus high-purity lithium sulfide may be prepared by reducing loss of sulfur in a subsequent process.

The step of obtaining lithium sulfide comprises drying and heat-treating a solvent-extracted product. The solvent-extracted product may be a solution comprising Li₂Sₓ. The drying and heat-treating of the solvent-extracted product may involve a solidification step.

The drying of the solvent-extracted product may be performed at a temperature in a range of 40 to 60 °C. Specifically, the drying may be performed at a temperature in a range of 45 to 55 °C.

In an embodiment, the drying of the solvent-extracted product may be performed in a vacuum atmosphere at a pressure of 40 mbar or less. Specifically, the drying step may be performed using a vacuum distillation method under the aforementioned pressure atmosphere. Through the drying step, a powder may be obtained from which the solvent, including water, in the solvent-extracted product has been removed.

In an embodiment, the step of heat-treating the solvent-extracted product may be performed at a temperature of 700 °C or higher. Specifically, the heat-treating step may be performed at 700 °C or higher after drying the solvent-extracted product. The step of heat-treating the solvent-extracted product may be a step of synthesizing Li₂S by performing heat treatment on a mixture of Li₂Sₓ and Li₂CO₃ obtained through a drying process.

In an embodiment, the step of heat-treating the solvent-extracted product may be performed in a temperature range of 700 °C or higher. As the heat-treating step is performed in the temperature range described above, lithium sulfide having a low oxygen content may be synthesized, and the yield of lithium sulfide from lithium may be increased. When the step of heat-treating the solvent-extracted product is performed at a temperature below the lower limit of the temperature range described above, there is a problem in that the oxygen content in Li₂S increases.

In one embodiment, the method may comprise a step of concentrating the solvent-extracted product prior to the drying step. The concentrating step may be performed in a temperature range of 60 to 70 °C. The drying step of the solvent-extracted product may be performed in a vacuum atmosphere at a pressure of 40 mbar or less.

The concentrating step may comprise a step of pulverizing LiOH in a solution comprising Li₂Sₓ, which is a solvent-extracted product. Regarding the concentration conditions, when H₂O is used as a solvent, the process may further include a purification step, in which a dried product is dissolved in an organic solvent such as THF, LiOH is precipitated by increasing the concentration of the solution through concentration under reduced pressure, the precipitated LiOH is removed via filtration, and Li₂Sₓ having relatively high purity is obtained.

In one embodiment, the method may comprise a step of purifying the solvent-extracted product between the concentrating step and the drying step. Specifically, the purifying step may be a step of separating LiOH solidified through the concentrating step, for example, LiOH solidified in a cake form.

In an embodiment, the step of purifying the solvent-extracted product may be performed using a solvent. The solvent may comprise, for example, at least one of tetrahydrofuran (THF), toluene, diethyl ether, and NMP (1-methyl-2-pyrrolidone). Specifically, the purifying step may be additionally performed, for example, when the solvent used in the solvent extraction process is water (H₂O).

In one embodiment, heat treatment for the dried product may be performed at 350 °C or higher. More specifically, it may be performed in a tube furnace at 400 °C or higher under an Ar flow. In the case of Li₂Sₓ, it may be thermally decomposed into Li₂S and S₂(gas) at approximately 350 °C. Accordingly, the S₂ in a gas phase may be recovered in an S8 form outside the furnace.

### [MODE FOR CARRYING OUT THE INVENTION]

Hereinafter, specific examples of the present invention will be described. However, the following examples are only specific examples of the present invention, and the present invention is not limited to the following examples.

### <Experimental Example>

### <Example 1>

As the carbon raw material (C), spent resistance material, which is discarded after use from an Acheson furnace of POSCO Future M, was prepared. After the carbon raw material (C) and lithium sulfate monohydrate were mixed at a weight ratio of 3 : 1, heat treatment was performed at 900 °C for 2 hours. Thereafter, 110 g of S₈ was added to the carbon-lithium sulfide (C-Li₂S) formed through the heat treatment, and a step of mixing with a solvent to perform extraction and filtration was conducted. At this time, the carbon-lithium sulfide (C-Li₂S) and S₈ were added at a weight ratio of 10 : 1, and 200 ml of THF and 1 ml of deionized water (D.I. water) were used as an extraction solvent.

Through the solvent extraction process, a Li₂Sₓ solution and carbon were obtained. Thereafter, through a vacuum filtration process using filter paper, the solution in which Li₂Sₓ and LiOH are mixed and the carbon were separated by filtration. At this time, X of the produced Li₂S_{X} has a value of 4 or more. Specifically, x has a value of 4.

Thereafter, the solution containing the mixture of Li₂Sₓ and LiOH was subjected to vacuum drying under the conditions of a reduced pressure (4 mbar) atmosphere, 65 °C, and 1 hour. Performing the drying resulted in obtaining a Li₂Sₓ solution and LiOH powder. Thereafter, the Li₂Sₓ solution and a LiOH cake were separated through a purification process using vacuum filtration.

Thereafter, the separated Li₂Sₓ solution was dried under reduced pressure at 80 °C for 3 hours. The resulting dried product was heat-treated under an Ar flow of 1 L/min at 400 °C for 1 hour to prepare lithium sulfide (Li₂S).

### <Example 2>

The procedure of Example 2 was performed in the same manner as in Example 1, except that the extraction was performed using a raw material mixing ratio of 110 g of a thermal reduction product and 8 g of S8.

### <Example 3>

Example 3 was performed in the same manner as Example 1, except that 200 ml of DIW was used instead of THF as the solvent for the raw materials of Example 2, and the solution obtained after the filtration process was subjected to vacuum drying under conditions of a reduced pressure (4 mbar) atmosphere, 110 °C, and 1 hour. The dried product thus obtained was redissolved in 200 ml of THF, followed by drying under conditions of a reduced pressure (4 mbar) atmosphere, 65 °C, and 1 hour to obtain the final dried product.

### <Example 4>

Example 4 was performed in the same manner as Example 1, except that the extraction was performed using a mixing ratio of raw materials of 110 g of a thermal reduction product and 15 g of S8.

### <Example 4>

Example 5 was performed in the same manner as Example 4 except that a heat treatment temperature was set to 500 °C.

### <Comparative Example 1>

Comparative Example 1 was performed in the same manner as Example 1, except that S₈ was not added in the solvent extraction step, ethanol was used as a solvent, and the heat treatment temperature was set to 800 degrees.

### <Comparative Example 2>

Comparative Example 2 was performed in the same manner as Example 1, except that the mixing ratio of the raw materials was 110 g of a thermal reduction product and 0.1 g of S8.

### <Comparative Example 3>

Comparative Example 3 was performed in the same manner as Example 1, except that the mixing ratio of raw materials was 110 g of a thermal reduction product and 15 g of S8, and the heat treatment temperature was set to 350 °C.

### <Comparative Example 4>

Comparative Example 4 was performed in the same manner as Example 3 except that a heat treatment temperature was set to 250 °C.

### <Comparative Example 5>

Comparative Example 5 was performed in the same manner as Example 2, except that n-propanol, which is a polar solvent containing H, was used as the extraction solvent.

### <Comparative Example 6>

Comparative Example 6 was performed in the same manner as Example 3, except that H₂O was used as an extraction solvent and additional purification using THF was not performed.

### <Comparative Example 7>

Comparative Example 7 was performed in the same manner as Example 2, except that the heat treatment temperature was set to 500 °C.

### <Evaluation Example>

Tables 1 and 2 below show the mass of the dried filtrate, the ICP of the dried product, the mass of Li₂S after heat treatment, the oxygen content, and the yield when the conditions during solvent extraction were changed.

Oxygen content: The oxygen content was analyzed using an N/O analyzer from RECO.

Yield: obtained as a ratio of a mass of Li₂S recovered after a final heat treatment process to Li₂S contained in a C-Li₂S mixture.

ICP: The ICP of a dried product was analyzed using a SPECTRO ARCOS instrument manufactured by SPECTRO AMETEK.

XRD: XRD peak values were analyzed using RIGAKU D/MAX 2500.

UV: The analysis was performed using a GENESYS^{™} 180 UV-Visible Spectrophotometer from Thermo Scientific.

**[Table 1]**

| | Raw material composition | | | | | | Solvent | | H₂ O added amount | Purificati on solvent | Heat treat ment temperature |
|---|---|---|---|---|---|---|---|---|---|---|---|
| | C-Li₂S (thermal reduction product) | Li₂S (content of Li₂S in the thermal reduction product) | S₈ | Li | S₈ | S/Li molar ratio | Typ e of extraction solvent | Amo unt added | | | |
| Unit | g | g | g | mole | mole | | - | mL | mL | - | °C |
| Example 1 | 110 | 10 | 1.0 | 0.217 | 0.466 | 2.14 | THF | 200 | 1 | - | 400 |
| Example 2 | 110 | 10 | 8.0 | 0.217 | 0.685 | 3.15 | THF | 200 | 1 | - | 400 |
| Example 3 | 110 | 10 | 8.0 | 0.217 | 0.685 | 3.15 | H₂O | 200 | - | THF | 400 |
| Example 4 | 110 | 10 | 15.0 | 0.217 | 0.904 | 4.16 | THF | 200 | 1 | - | 400 |
| Example 5 | 110 | 10 | 15.0 | 0.217 | 0.904 | 4.16 | THF | 200 | 1 | - | 500 |
| Comparative Example 1 | 110 | 10 | 0 | 0.217 | 0.438 | 0.5 | ethanol | 200 | 1 | - | 800 |
| Comparative Example 2 | 110 | 10 | 0.1 | 0.217 | 0.438 | 2.0 | THF | 200 | 1 | - | 400 |
| Comparative Example 3 | 110 | 10 | 15.0 | 0.217 | 0.904 | 4.16 | THF | 200 | 1 | - | 350 |
| Comparative Example 4 | 110 | 10 | 8.0 | 0.217 | 0.685 | 3.15 | H₂O | 200 | - | THF | 250 |
| Comparative Example 5 | 110 | 10 | 8.0 | 0.217 | 0.685 | 3.15 | n-propanol | 200 | - | - | 400 |
| Comparative Example 6 | 110 | 10 | 8.0 | 0.217 | 0.685 | 3.15 | H₂O | 200 | - | - | 400 |
| Comparative Example 7 | 110 | 10 | 8.0 | 0.217 | 0.685 | 3.15 | THF | 200 | - | - | 500 |

**[Table 2]**

| | Mass of dried filtrate | ICP analysis of dried product | | | | | Mass of Li2S after heat treatment | oxygen content | yield |
|---|---|---|---|---|---|---|---|---|---|
| | | Li | S | Li | S | S/Li | | | |
| Unit | g | wt% | wt% | mol/g | mol/g | - | g | % | % |
| Example 1 | 120 | 0.012 | 0.118 | 0.002 | 0.004 | 2.1 | 8.1 | 0.7 | 81 |
| Example 2 | 150 | 0.010 | 0.139 | 0.001 | 0.004 | 3.2 | 8.28 | 0.5 | 82.8 |
| Example 3 | 60 | 0.024 | 0.347 | 0.003 | 0.011 | 3.2 | 8.55 | 1.3 | 70 |
| Example 4 | 150 | 0.010 | 0.183 | 0.001 | 0.006 | 4.2 | 8.46 | 0.4 | 84.6 |
| Example 5 | 150 | 0.010 | 0.183 | 0.001 | 0.006 | 4.2 | 8.1 | 0.42 | 81 |
| Comparative Example 1 | 80 | 0.019 | 0.158 | 0.003 | 0.005 | 0.45 | 7.92 | 5.2 | 79.2 |
| Comparative Example 2 | 80 | 0.019 | 0.158 | 0.003 | 0.005 | 1.8 | 8.91 | 2.5 | 89.1 |
| Comparative Example 3 | 150 | 0.010 | 0.183 | 0.001 | 0.006 | 4.2 | 94.5 | 10 | 94.5 |
| Comparative Example 4 | 60 | 0.024 | 0.347 | 0.003 | 0.011 | 3.2 | 5.67 | 12 | 56.7 |
| Comparative Example 5 | 60 | 0.024 | 0.347 | 0.003 | 0.011 | 3.2 | 4.59 | 2.0 | 81.5 |
| Comparative Example 6 | 60 | 0.024 | 0.347 | 0.003 | 0.011 | 3.2 | 3.78 | 20 | 37.8 |
| Comparative Example 7 | 0.8 | 0.190 | 3.287 | 0.027 | 0.103 | 3.8 | 0.1 | 2.0 | 1.0 |

Referring to Tables 1 and 2, it was confirmed that under conditions where the S:Li ratio was 2 to 4, the Li₂S dried product after solvent extraction exhibited low oxygen content and high yield according to ICP analysis. Specifically, for Examples 1, 3, 4, and 5 using THF as a solvent, the oxygen content in the lithium sulfide final product was less than 1%, confirming a very high-purity quality. In Examples 1, 3, 4, and 5, Li₂S may be obtained with a high yield of 80% or more. Furthermore, in Example 3 using water as a solvent, Li₂S of relatively high purity may also be obtained with an oxygen content of approximately 1.3% and a yield of approximately 70% through a purification process using THF. This confirms that high-purity Li₂S may be obtained even when exposed to the atmosphere, which provides advantages for scale-up when selecting extraction and drying process equipment. Specifically, it was confirmed that Comparative Examples 4 and 5, in which the heat treatment temperature was excessively low; Comparative Example 2, in which ethanol was used as an extraction solvent without adding S₈; Comparative Example 3, in which the content of S₈ was excessively low; Comparative Examples 6 and 7, in which THF was not used as an extraction solvent; and Comparative Example 8, in which no water was added during solvent extraction, exhibited low purity due to high oxygen content compared to Examples 1 to 4. Also, it was confirmed that for Examples 1, 2, and 4, the oxygen content was less than 1.0%.

As in Example 5, it was confirmed that the thermal decomposition of Li₂Sₓ into Li₂S and S₂(gas) is sufficiently achieved at a temperature of 400 °C or higher. In Comparative Example 1, solvent extraction was performed using ethanol without the addition of S₈ in a conventional thermal reduction process. This approach has problems in that it is difficult to obtain high-purity lithium sulfide due to a higher oxygen content compared to the Examples, an equipment structure requiring airtightness to thoroughly prevent atmospheric exposure during processes such as extraction and drying is necessary, and there is a limitation in the scale-up of condensation equipment for recovering ethanol.

In Comparative Example 2 where a weight ratio of Li₂S to S was 10:0.1, it was confirmed that a molar ratio of S:Li was 1.8, which is 2 or less, according to the ICP analysis results of a dried product. In this case, it may be confirmed through UV analysis results that a polysulfide having an X value of 3 is formed. Specifically, it was confirmed that when heat treatment is performed in a state where some LiOH is mixed with the dried product in which Li₂S and Li₂S₃ are mixed, Li₂SO₄ is formed, and finally, Li₂S containing relatively high impurities at an oxygen content level of 2.5 % is obtained.

In Comparative Example 3 where a heat treatment temperature was 350 °C, it may be confirmed that it has an oxygen content 10 % higher than that of Example 4. It was confirmed that this is caused by decomposition of a solvent and LiOH in a state where polysulfide is not decomposed at the temperature of 350 °C.

In Comparative Example 4, wherein H₂O was used as a solvent, a purification process was performed with THF, and a heat treatment was performed at 250 °C, the oxygen content was confirmed to be as high as 12%, and the yield was confirmed to be low compared to Example 3. This was confirmed to be due to LiOH and Li₂CO₃ present in the extraction solution resulting from the use of H₂O as the solvent, which affected the oxygen content even after the purification process.

In Comparative Example 5 where n-propanol was used in the solvent extraction process, when the solution after extraction was dried, its weight was relatively high at the 8.73 g level, but it was confirmed that the yield after heat treatment was as low as the 60 % level and the oxygen content was also high. This was confirmed to be due to significant weight reduction resulting from the thermal decomposition of lithium alkoxide present in the extraction solution and the formation of Li₂CO₃ produced by the thermal decomposition of lithium alkoxide.

Comparative Example 6, in which H₂O was used as a solvent in the solvent extraction process and a separate purification process was not performed, was confirmed to have a significantly higher oxygen content and a lower yield compared to Example 3, which underwent redissolving and purification processes with THF. This confirmed that when the purification process is not performed, the content of LiOH and Li₂CO₃ present in the solution is high, and thus the final product contains many impurities even after drying; consequently, it was confirmed that several types of impurities containing high levels of oxygen remain even after heat treatment at 400 °C.

In Comparative Example 7, where H₂O was not added during the solvent extraction process, it was confirmed that SH⁻ ions were not formed, and thus dissolution through reduction of S₈ did not occur. Although heat treatment was performed on a minimal amount of a dried product, it was confirmed that Li2S could not be obtained with a final recovery yield of 1 %.

FIGS. 2a to 2c are UV analysis graphs according to Examples and Comparative Examples of the present invention.

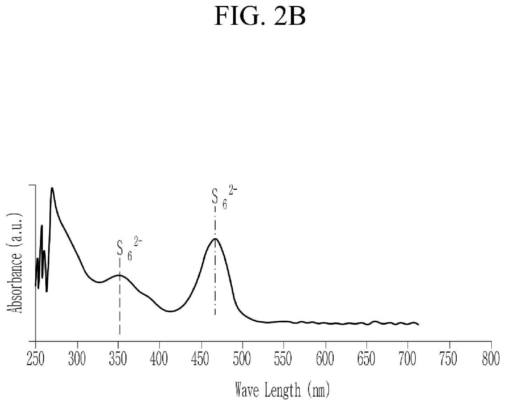

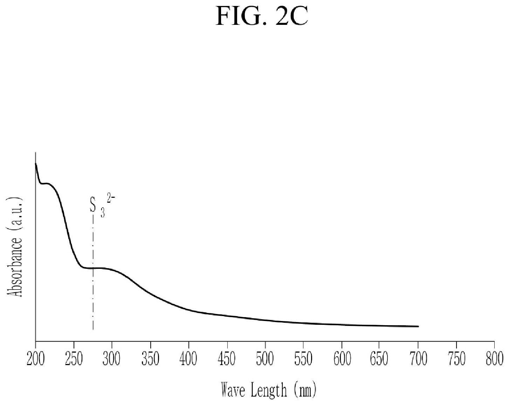

FIG. 2a is a UV analysis result when an S/Li molar ratio is 2 or more, FIG. 2b is a UV analysis result when an S/Li molar ratio is 3 or more, and FIG. 2c is a UV analysis graph when an S/Li molar ratio is lower than 2.

Referring to FIGS. 2a and 2b, as in Example 3, UV spectra for the extraction solutions confirmed that when a molar ratio of S/Li is 2 to 4, polysulfide in the solution exists in the form of S₄²⁻ and S₆²⁻ ions. The UV analysis was performed with the filtered solution diluted in a DMSO solution.

Referring to FIG. 2c, it was confirmed that, as in Comparative Examples 1 and 2, S₃²⁻exists in the extraction solution when the ratio of S/Li is 1.8. Through this, it was confirmed by UV analysis that Sₓ²⁻ in the extraction solutions of the Examples were converted into S₆²⁻ via S₄²⁻.

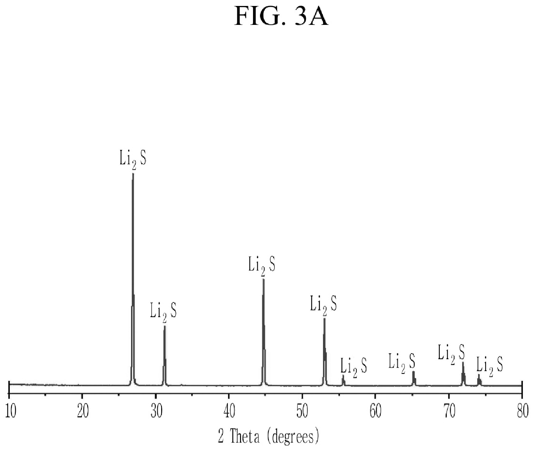

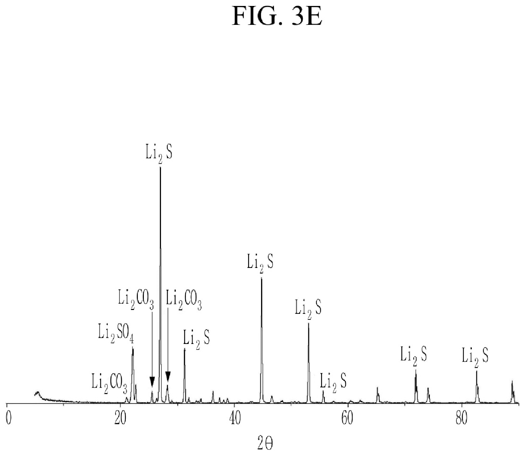

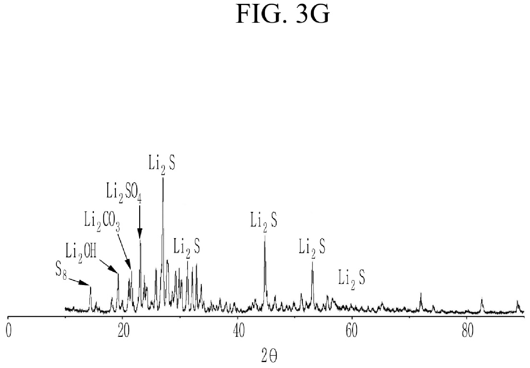

FIGS. 3a to 3g are XRD pattern graphs of Examples and Comparative Examples of the present invention.

FIGS. 3a to 3g show XRD patterns of Example 2, Example 3, Comparative Example 2, Comparative Example 3, Comparative Example 4, Comparative Example 5, and Comparative Example 6 in order.

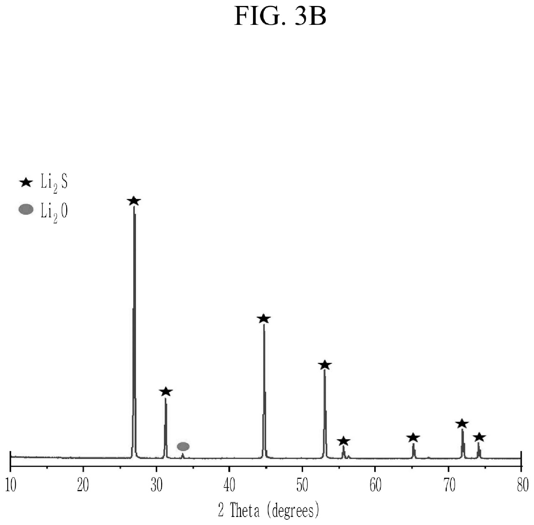

Referring to FIGS. 3a and 3b, it may be confirmed that in Example 3, a minimal amount of Li₂O is observed. This confirms that although the oxygen content is at a 1.3 % level, which is a somewhat higher level of oxygen content than in Examples 1, 2, and 4, it shows a lower level of oxygen content compared to the Comparative Examples.

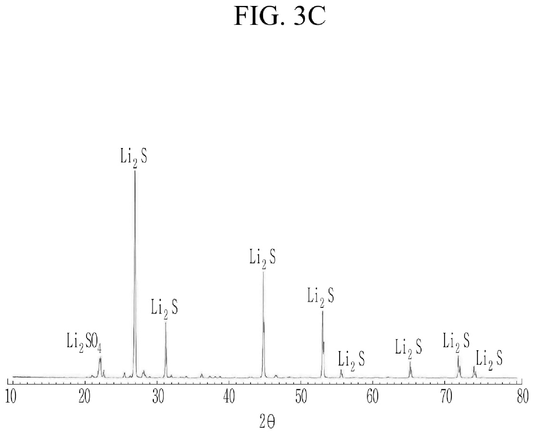

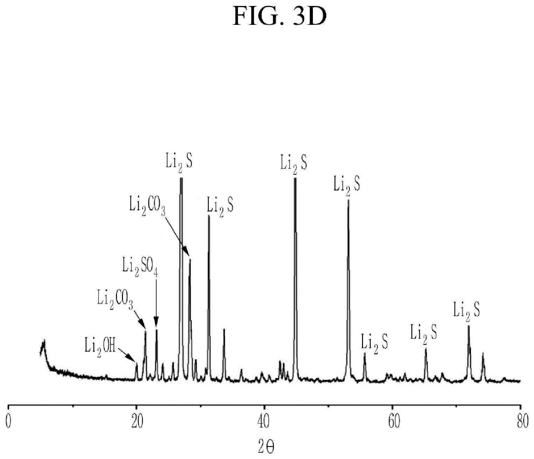

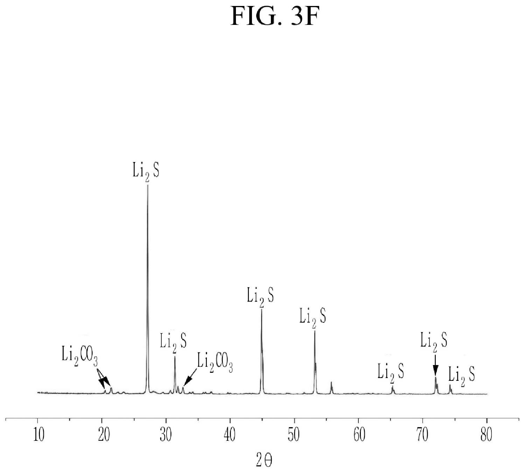

Referring to FIG. 3c, it was confirmed that a peak of Li₂SO₄ was observed together with Li₂S. Since Comparative Example 2 has a relatively high oxygen content, it may be confirmed that the result is due to Li₂SO₄. Referring to FIGS. 3d to 3f, peaks such as Li₂CO₃ and Li₂SO₄ were observed in Comparative Examples 3 to 5 due to oxygen. Referring to FIG. 3f, it was confirmed that in Comparative Example 6, S₈ was observed together with LiOH, Li₂CO₃, and Li₂SO₄.

The present invention is not limited to the embodiments and/or examples described above but may be prepared in various different forms, and those skilled in the art will understand that the present invention may be embodied in other specific forms without changing the technical spirit or essential features of the present invention. Therefore, it should be understood that the embodiments and/or examples described above are illustrative in all respects and not restrictive.

## Claims

1. A method for preparing lithium sulfide, comprising: heat-treating a mixture of lithium sulfate powder and a carbon-based material; solvent-extracting a heat-treated product with water (H₂O) or an aprotic polar solvent; and obtaining lithium sulfide, wherein the solvent-extracting of the heat-treated product comprises adding a sulfur source to the heat-treated product.

2. The method of claim 1, wherein the solvent-extracting of the heat-treated product is performed such that a weight ratio of the sulfur source to Li₂S in the heat-treated product ranges from 0.05 to 2.0.

3. The method of claim 1, wherein the sulfur source is S₈.

4. The method of claim 1, wherein in the solvent extraction step, the aprotic polar solvent comprises at least one selected from the group consisting of tetrahydrofuran (THF), toluene, diethyl ether, and NMP (1-methyl-2-pyrrolidinone).

5. The method of claim 1, wherein the solvent extraction step comprises obtaining Li₂Sₓ from a solvent-extracted product, wherein x in the Li₂Sₓ is 4 or more.

6. The method of claim 1, wherein the step of obtaining the lithium sulfide comprises drying a solvent-extracted product at 40 to 60 °C.

7. The method of claim 1, wherein the step of obtaining the lithium sulfide comprises heat-treating a solvent-extracted product at a temperature of 400 °C or higher.

8. The method of claim 1, wherein in the step of heat-treating the mixture of the lithium sulfate and the carbon-based material, the mixing ratio of the carbon-based material to the lithium sulfate is from 3:1 to 7:1 by weight, expressed as C:Li2SO4.

9. The method of claim 5, further comprising, before the drying step, concentrating the solvent-extracted product in a temperature range of 60 to 70 °C.

10. The method of claim 1, wherein when the solvent is water (H₂0) in the solvent extraction step, the method further comprises a step of purifying the solvent-extracted product.

11. The method of claim 10, wherein the purifying step uses a solvent comprising at least one selected from the group consisting of tetrahydrofuran (THF), toluene, diethyl ether, and NMP (1-methyl-2-pyrrolidinone).

12. The method of claim 1, wherein the carbon-based material is at least one selected from the group consisting of coke, artificial graphite, carbon powder, graphene, activated carbon, and carbon black, each having a carbon content of 99.9% or more.

13. The method of claim 12, wherein the artificial graphite is a spent resistance material from an Acheson furnace.

14. The method of claim 1, wherein the step of heat-treating the mixture of lithium sulfate and a carbon-based material is performed at a temperature ranging from 800 to 1,000 °C.

15. The method of claim 1, wherein the step of heat-treating the mixture of the aqueous lithium sulfate solution and the carbon-based material is performed for a time in the range of 1 to 3 hours.

16. The method of claim 1, wherein when the solvent is an aprotic polar solvent in the solvent extraction step, the method comprises a step of adding water (H₂O) as an additive.

17. The method of claim 17, wherein a ratio of the added amount of the solvent to the added amount of the added water is 150 to 250.
